Europäisches Patentamt

European Patent Office

Office européen des brevets

(19)

(11) **EP 1 197 283 A1**

(12) # EUROPEAN PATENT APPLICATION

(43) Date of publication:
**17.04.2002 Bulletin 2002/16**

(51) Int Cl.7: **B23F 17/00**, G05B 19/41

(21) Application number: **00121836.1**

(22) Date of filing: **06.10.2000**

(84) Designated Contracting States:
**AT BE CH CY DE DK ES FI FR GB GR IE IT LI LU MC NL PT SE**
Designated Extension States:
**AL LT LV MK RO SI**

(71) Applicant: **Caterpillar Inc.**
**Peoria Illinois 61629-6940 (US)**

(72) Inventors:
• **Avery, Bennett W., Caterpillar Inc.**
**Peoria, Illinois 61629-6490 (US)**
• **Thurman, Danny L., c/o Caterpillar Inc.**
**Peoria, Illinois 61629-6490 (US)**

• **Matson, Gregory A., c/o Caterpillar Inc.**
**Peoria, Illinois 61629-6490 (US)**
• **Pulley, Franklin T., c/o Caterpillar Inc.**
**Peoria, Illinois 61629-6490 (US)**
• **Kipling, Michael W., c/o Caterpillar Inc.**
**Peoria, Illinois 61629-6490 (US)**

(74) Representative: **Wagner, Karl H., Dipl.-Ing.**
**Wagner & Geyer,**
**Patentanwälte,**
**Gewürzmühlstrasse 5**
**80538 München (DE)**

(54) **Method for producing and controlling on a fillet gear**

(57)     The present method includes the steps of fitting a polynomial curve to the design criteria points (10), and producing the fillet (18) on the gear (16), the fillet having a curved shape corresponding to the fitted polynomial curve. As a further step for control of the fillet, the actual shape of the fillet produced can be inspected and compared to the fitted curve, using a coordinate measuring machine or other suitable device. According to a further aspect of the invention, the fillet is produced using a tool having a curved surface corresponding to the polynomial curve.

Fig. 2

EP 1 197 283 A1

Printed by Jouve, 75001 PARIS (FR)

## Description

Technical Field

This invention relates generally to a method for producing a fillet on a gear and controlling the same, and more particularly, to a method for producing a fillet to a shape derived as a function of design criteria for the fillet, and inspecting the fillet for conformance to the derived shape.

Background Art

In the design of gears, one of the main limiting factors in the load capacity of a given gear is the bending strength of its teeth. Although it is known to increase bending strength by selecting gear teeth having a corser pitch, this has been found to normally reduce the gear's load capacity in other types of failure modes such as pitting and scuffing. Many strategies are known for increasing bending strength of a gear without altering the general gear design, including, but not limited to, use of better materials, hardening methods, and shot peening.

Another strategy would be to reduce the peak bending stress value of a gear tooth without changing the basic tooth dimensions. In this regard, it is known that the typical location for the peak bending stress is the tooth fillet which encompasses a transition area extending between the start of an active profile region of the tooth wherein it engages teeth of a mating gear and the root of the tooth where it joins the gear body. An ideal stress reduction strategy would reduce the stress gradient along the tooth fillet such that high stress concentrations are not present.

Accordingly, the present invention is directed to achieving one or more of the objectives as set forth above.

Disclosure Of The Invention

In one aspect of the present invention, a method for producing a fillet on a gear as a function of a plurality of design criteria points is disclosed. The present method includes the steps of fitting a polynomial curve to the design criteria points, and producing the fillet on the gear, the fillet having a curved shape corresponding to the fitted polynomial curve. As a further step for control of the fillet, the actual shape of the fillet produced can be inspected and compared to the fitted curve, using a coordinate measuring machine or other suitable device. According to a further aspect of the invention, the fillet is produced using a tool having a curved surface corresponding to the polynomial curve.

Brief Description Of The Drawings

Fig. 1 is a diagrammatic representation showing a curve fitted to a plurality of design criteria points for a pair of fillets according to the present invention;
Fig. 2 is a schematic representation of a gear segment including fillets having curved profile shapes produced to the curve of Fig. 1; and
Fig. 3 is a block diagram of the present method.

Best Mode For Carrying Out The Invention

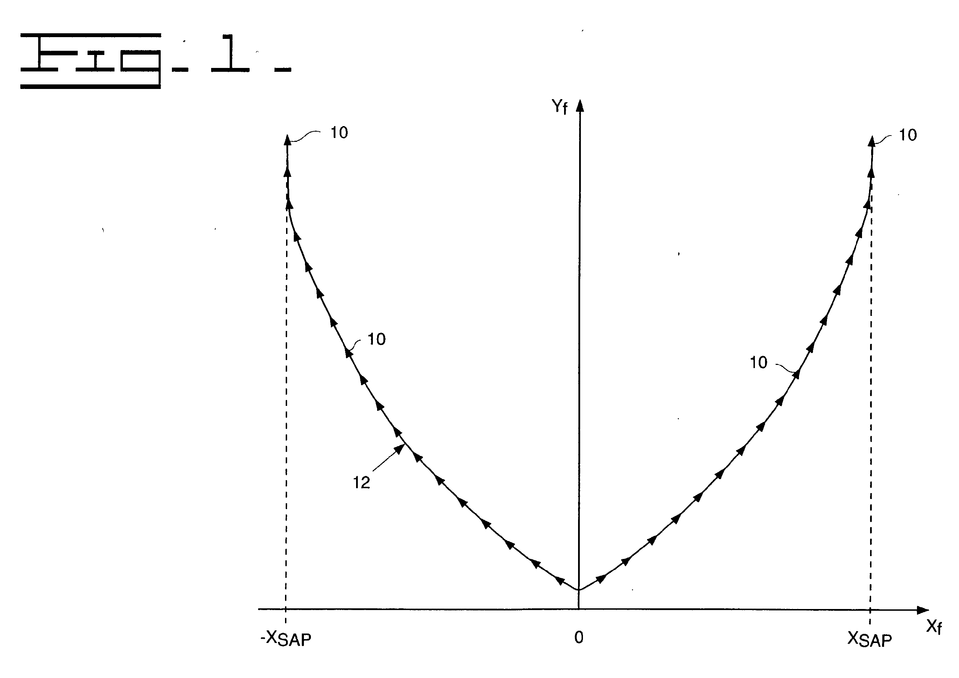

Referring now to the drawings, Fig. 1 is a graph of a plurality of design criteria points 10 for a pair of fillets to extend from the start of the active profile ($-X_{sap}$) of a first gear tooth through the root of the tooth (0), to the start of the active profile ($X_{sap}$) of an adjacent second gear tooth. The locations of points 10 have been determined using an algorithm which provides a relatively flat stress gradient for the fillets, that is, a stress gradient wherein load stresses are substantially evenly distributed along the fillets, such that no substantial stress concentrations are present along the fillet surfaces so as to reduce the likelihood of one or both of the gear teeth breaking in the vicinity of the fillet due to excessive bending stresses.

A polynomial curve 12, preferably of the second order, is fitted to points 10 as shown using a conventional curve fitting technique, such as the well known least squares technique, using an equation such as the following.

$$y_f = \sum_{n=0}^{N} C_n x_f^n$$

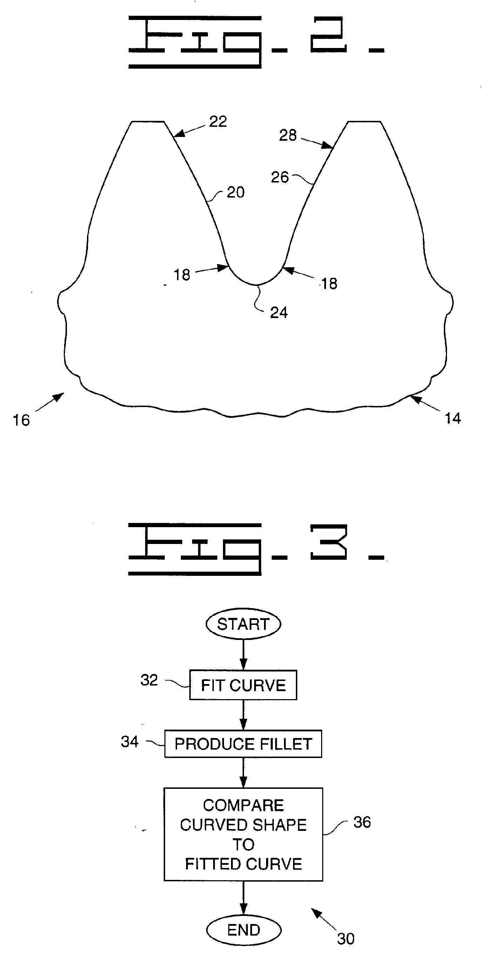

Turning to Fig. 2, a segment 14 of a gear 16 is shown including fillets 18 produced according to the present invention. Each fillet 18 extends from the start of the active profile 20 or 26 of a respective first gear tooth 22 or an adjacent second gear tooth 28 to the tooth root 24.

Fillets 18 can be produced using any of a variety of conventional gear manufacturing techniques, including, but not limited to, by milling with a milling cutter, forming with a shape cutter, hobbing, diecasting, drawing, extruding, forming from sintered powder, stamping, or finish grinding of a near net shape which is either machined or forged, preferably to have an outer surface curved to correspond to the desired curved shape leaving a substantially uniform layer of finish stock on the gear. Fillets 18 can also be formed by injection molding in the instance of non-metallic gears. Preferably, the curve fitted to the design criteria points is reproduced on the cutter, hob, die, and/or grinding wheel such that the curve is imparted to the fillet when the fillet is produced thereby.

After the fillet has been produced, the curved shape thereof can be compared to the original curve to determine the conformity of the fillet to the curve. This can be accomplished using suitable conventional means, such as, but not limited to, a coordinate measuring machine or the like.

Turning to Fig. 3, a flow chart 30 of the present method is shown. Starting at block 32, a polynomial curve is fit to a plurality of design criteria points determined to provide the desired design characteristics for the fillet. At block 34 fillets are produced on a gear between adjacent teeth of the gear, the fillets each having a curved shape corresponding to the polynomial curve fitted at block 32.

Then, at block 36 the curve of the fillets produced are compared to the fitted curve for verifying conformance of the curved shaped thereto.

Industrial Applicability

The present method for producing and controlling a gear fillet has utility for use with gears for a wide variety of purposes, particularly wherein design of the fillet to better withstand bending stresses is an important design consideration.

Other aspects, objects and advantages of the present invention can be obtained from a study of the drawings, the disclosure and the appended claims.

**Claims**

1. A method for producing a fillet 18 on a gear 16 as a function of a plurality of design criteria points 10, the method comprising the steps of:

    (a) fitting a polynomial curve 12 to the design criteria points 10; and
    (b) producing the fillet 18 on the gear 16, the fillet 18 having a curved shape corresponding to the polynomial curve 12 fitted in step (a).

2. The method, as set forth in claim 1, comprising the further step of comparing the fillet 18 produced in step (b) with the curve 12 fitted in step (a) .

3. The method, as set forth in claim 2, wherein the further step is performed using a coordinate measuring machine.

4. The method, as set forth in claim 1, comprising the further step of providing a tool having a curved surface corresponding to the polynomial curve 12 fitted in step (a), and wherein the fillet 18 is produced using the tool to impart the curved shape to the fillet 18.

5. The method, as set forth in claim 4, wherein the tool is a grinding tool.

6. The method, as set forth in claim 4, wherein the tool is a cutting tool.

7. The method, as set forth in claim 1, where in step (b) the gear 16 is produced from a near-net shape forging including finish stock for removal when the fillet 18 is produced, the finish stock having an outer surface having a curved shape corresponding to the polynomial curve 12 such that a substantially uniform layer of the finish stock is removed to produce the fillet 18.

8. The method, as set forth in claim 1, wherein the polynomial is at least a second order polynomial.

9. The method, as set forth in claim 1, wherein the design criteria points 10 have locations determined at least in part using an algorithm for providing a desired distribution of stress along the fillet 18.

Fig. 1

_Fig. 2._

_Fig. 3._

**European Patent Office**

## EUROPEAN SEARCH REPORT

Application Number

EP 00 12 1836

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | PAPAIONNOU S G: "MANUFACTURE OF HIGH PRECISION SPUR GEARS WITH END MILLING CUTTERS" TRANSACTIONS OF THE AMERICAN SOCIETY OF MECHANICAL ENGINEERS, SERIES B: JOURNAL OF ENGINEERING FOR INDUSTRY,US,ASME. NEW YORK, vol. 110, no. 4, 1 November 1988 (1988-11-01), pages 359-366, XP000024314 ISSN: 0022-0817 * page 362, right-hand column, line 1 - page 363, left-hand column, line 11 * * page 363, left-hand column, line 60 - page 364, left-hand column, line 3 * * page 366, left-hand column, line 1 - line 3 * | 1-3,8 | B23F17/00 G05B19/41 |
| Y | DE 44 30 003 A (SIEMENS AG) 29 February 1996 (1996-02-29) * the whole document * | 1-3,8 | |
| A | CASTELLANI G ET AL: "FILLET GEOMETRY OF GROUND GEAR TEETH" GEAR TECHNOLOGY,US,RANDALL PUBLISHING CO. ELK GROVE, ILLINOIS, vol. 6, no. 1, 1989, pages 19-20,22-23,26-, XP000006809 ISSN: 0743-6858 * page 23, right-hand column, line 14 - line 25 * * page 30, right-hand column, line 24 - line 35 * | 1-3,5,8, 9 | TECHNICAL FIELDS SEARCHED (Int.Cl.7) B23F G05B |
| A | US 4 811 528 A (SOMMER GERD R) 14 March 1989 (1989-03-14) * column 1, line 51 - line 66; figure 11 * | 1 | |
| | -/-- | | |

The present search report has been drawn up for all claims

| Place of search | Date of completion of the search | Examiner |
|---|---|---|
| THE HAGUE | 13 March 2001 | Moet, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

**European Patent Office**

## EUROPEAN SEARCH REPORT

Application Number

EP 00 12 1836

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | DE 42 13 927 A (FESTO KG) 4 November 1993 (1993-11-04) * abstract * * column 2, line 19 - line 23 * * figure 2 * | 1,2 | |
| A | US 5 802 921 A (ROUVEROL WILLIAM S) 8 September 1998 (1998-09-08) * column 8, line 12 - line 17 * * column 10, line 59 * * column 11, line 59 - line 61 * * figures 10,11 * | 1 | |
| A | DE 43 05 409 A (IBH BERNHARD HILPERT INGENIEUR) 25 August 1994 (1994-08-25) * page 7, line 1 - line 5 * | 1,8 | |
| A | SIMON F: "FUENFACHSIGES FRAESEN MIT FERTIGUNGSOPTIMIERENDEM MESSEN AN TURBINENSCHAUFELN" VDI Z,DE,VDI VERLAG GMBH. DUSSELDORF, vol. 133, no. 6, 1 June 1991 (1991-06-01), pages 90-92,95-96,, XP000237548 ISSN: 0042-1766 * page 96, left-hand column, line 1 - line 9; figure 7 * | 3 | TECHNICAL FIELDS SEARCHED (Int.Cl.7) |
| A | DE 747 715 C (N.N.) * page 2, line 14 - line 42 * * figure 2 * | 4,6 | |
| A | PATENT ABSTRACTS OF JAPAN vol. 010, no. 304 (M-526), 16 October 1986 (1986-10-16) & JP 61 117014 A (TOYOTA MOTOR CORP), 4 June 1986 (1986-06-04) * abstract * | 5 | |

The present search report has been drawn up for all claims

| Place of search | Date of completion of the search | Examiner |
|---|---|---|
| THE HAGUE | 13 March 2001 | Moet, H |

## ANNEX TO THE EUROPEAN SEARCH REPORT
## ON EUROPEAN PATENT APPLICATION NO.

EP 00 12 1836

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2001

| Patent document cited in search report | | Publication date | Patent family member(s) | | Publication date |
|---|---|---|---|---|---|
| DE 4430003 | A | 29-02-1996 | NONE | | |
| US 4811528 | A | 14-03-1989 | CH | 664717 A | 31-03-1988 |
| | | | DD | 237998 A | 06-08-1986 |
| | | | EP | 0180747 A | 14-05-1986 |
| | | | JP | 61117013 A | 04-06-1986 |
| | | | SU | 1574163 A | 23-06-1990 |
| | | | US | 4815239 A | 28-03-1989 |
| | | | US | 4955163 A | 11-09-1990 |
| DE 4213927 | A | 04-11-1993 | NONE | | |
| US 5802921 | A | 08-09-1998 | NONE | | |
| DE 4305409 | A | 25-08-1994 | NONE | | |
| DE 747715 | C | | NONE | | |
| JP 61117014 | A | 04-06-1986 | NONE | | |

EPO FORM P0459

For more details about this annex : see Official Journal of the European Patent Office, No. 12/82